(19)

Europäisches
Patentamt
European
Patent Office
Office européen
des brevets

(11) **EP 2 154 178 A1**

(12) **EUROPEAN PATENT APPLICATION**

(43) Date of publication:
**17.02.2010 Bulletin 2010/07**

(51) Int Cl.:
*C08J 5/00* (2006.01)  *C08L 23/00* (2006.01)
*C08K 3/04* (2006.01)  *C08K 3/34* (2006.01)
*C08K 3/26* (2006.01)  *C08K 3/36* (2006.01)
*C08K 3/14* (2006.01)

(21) Application number: **08162192.2**

(22) Date of filing: **12.08.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Borealis AG**
**1220 Vienna (AT)**

(72) Inventors:
• **Lackner, Maximilian**
**1110 Wien (AT)**
• **Braun, Juliane**
**4040 Linz (AT)**

• **Lepschi, Alexander**
**4040 Linz (AT)**
• **Pham, Tung**
**4040 Linz (AT)**
• **Zopf, Ernst**
**4222 St. Georgen (AT)**

(74) Representative: **Lux, Berthold**
**Maiwald Patentanwalts GmbH**
**Elisenhof**
**Elisenstraße 3**
**80335 München (DE)**

Remarks:
Amended claims in accordance with Rule 137(2)
EPC.

(54) **Process for the preparation of nanocomposites**

(57) Process for the preparation of a nanocomposite comprising polypropylene and a mineral filler, wherein the process comprises the steps of
• forming a slurry by adding at least a mineral filler to a dispersant,
• freezing the slurry obtaining a frozen slurry,
• optionally breaking the frozen slurry into feedable particles, and
• extruding the frozen slurry with polypropylene.

EP 2 154 178 A1

**Description**

The present invention is directed to a new process for the preparation of nanocomposites comprising a polyolefin and a mineral filler as well as to nanocomposites obtained by the new process.

Polyolefin, in particular polypropylene, is a versatile material widely used for automotive components, home appliances and industrial applications. To meet demanding engineering and structural specifications, polyolefin, in particular polypropylene, is seldom used in its pristine state and is often transformed into composites by the inclusion of fillers. Introduction of fillers into polyolefin, in particular polypropylene, often alters the crystalline structure and morphology of the polymer and consequently result in property changes.

Lately, many nanometer sized mineral fillers have been described and they represent a new class of alternative fillers for polymers. Organoclay, nanosized silica, carbon nanotubes and nanosized calcium carbonate are for instance promising candidates. Studies have shown that the large surface area of these nanofillers promotes better interfacial interactions with the polymer matrix compared to conventional micrometer size particles, leading to better property enhancement, for instance in stiffness.

However, the high adsorption surface energies associated with these mineral fillers, i.e. mineral nanofillers, cause agglomeration and the formation of aggregates. Such agglomerates have a strong negative influence on important mechanical properties, like impact performance.

Improvement in impact performance can only be accomplished if the nanoparticles are homogeneously dispersed throughout the polymer.

It is known that nanofillers can be produced either in advance, i.e. before added to the polymer, or in situ during the compounding step.

Key factors which contribute essentially to the dispersion of nanofillers in a polymer matrix are the melt compounding step including mixing technique and parameters employed, the type of surface modification performed on the used filler and the addition of suitable coupling agents during compounding.

Even though in principle it is know as to how improve the mechanical properties of polyolefin by the addition of mineral fillers, the way to put the technical knowledge into practice is not satisfying. In other words the known processes are unable to tap the full potential of known mineral fillers, especially known mineral nanofillers. Main problems in known processes are that not all fillers reaching nano-scale dimensions and the dispersion of the nanofillers and/or fillers are unsatisfactory.

Thus the object of the present invention is to provide a process which enables an even dispersion of nanofillers in the polyolefin during the preparation of nanocomposites. In other words it is sought for a process which enables the preparation of nanocomposites which are characterized by a high stiffness, particular in terms of tensile modulus, but keeping its impact performance on a high level.

The finding of the present invention is that the dispersion and/or exfoliation of the fillers can be accomplished during the extrusion process by rapid gas expansion.

Thus the present invention is directed to a process for the preparation of a nanocomposite comprising a polyolefin and a mineral filler, preferably a mineral nanofiller, wherein the process comprises the steps of

(a) forming a slurry (S) by adding at least a mineral filler (F) to a dispersant (D),
(b) freezing the slurry (S) obtaining a frozen slurry (FS),
(c) optionally breaking the frozen slurry (FS) into feedable particles,
(d) extruding the frozen slurry (FS) with polyolefin (PO),
(e) optionally removing the dispersant (D) in gaseous form during the extrusion, and
(f) optionally recovering the prepared nanocomposite.

Preferably the mineral filler in the final nanocomposite is a mineral nanofiller.

It has been in particular found out that the above defined process leads to nanocomposites with improved stiffness and impact performance compared to nanocomposites which have been produced with non-frozen mineral fillers (see Table 1)

In the following the invention is described in more detail.

The expression "mineral nanofiller" as used herein refers to substances which have, dispersed in the polyolefin (PO), structures in the nanoscale dimension from 1 to 500 nm. Usually, the particles of the mineral nanofiller are dispersed in the polyolefin (PO), so that the maximum thickness of the particles in at least one dimension is 20 nm or less, more preferably 10 nm or less.

The term "nanocomposite" designates a multiphase material where at least one phase, i.e. the mineral filler, in particular the mineral nanofiller, is dispersed in the polyolefin (PO) preferably at a nanometer level. Thus the nanocomposite according to this invention preferably comprises a polyolefin (PO) being a matrix in which the mineral filler, preferably the mineral nanofiller, is dispersed. Even more preferred the mineral filler according to this invention being dispersed in the polyolefin (PO) has a weight average particle size of below 500 nm, more preferably below 100 nm, still more preferred below 50 nm, yet more preferred below 20 nm, still yet more preferred below 10 nm.

The term "slurry" is used for a suspension of solids in a liquid. More precisely the slurry (S) according to this invention is a suspension of the mineral filler (F) in a liquid, i.e. in the dispersant (D). Accordingly the slurry (S) of the present invention comprises the solid mineral filler (F) suspended in the dispersant (D). This definition however does not exclude the option that the slurry (S) may comprise other solids than the mineral filler (F) being suspended in the dispersant (D). For instance the slurry (S) may comprise additionally a solid compatibilizer (C). Thus in one preferred embodiment the slurry (S) comprises the mineral filler as the only solid component. In another preferred embodiment the slurry (S) comprises the mineral filler (F) and the compatibilizer (C) as the only solid components.

The dispersant (D) used in the present invention can be any liquid suitable to suspend the mineral filler (F). Accordingly the dispersant (D) is(are) water and/or (a) volatile organic compound(s). A volatile organic compound according to this invention is any organic compound having an initial boiling point between 20 to 250 °C, preferably 30 to 150 °C, measured at a standard atmospheric pressure of 101.3 kPa. Accordingly the dispersant (D) is preferably selected from the group consisting of water, C 1 to C20 alcohol, glycerol and mixtures thereof. Even more preferred the dispersant (D) is selected from the group consisting of water, methanol, ethanol, isopropanol, n-propanol, tert-butanol, n-butanol, n-pentanol, n-hexanol, glycerol and mixtures thereof. Most preferably the dispersant (D) is water, ethanol or a mixture thereof.

The mineral filler (F) used in the preparation of the nanocomposite can be any mineral filler suitable for the improvement of mechanical properties of the polyolefin (PO) in which it shall be dispersed. In particular the mineral filler (F) shall be suitable when dispersed in the polyolefin (PO) to improve the stiffness of the polymer by keeping the impact on a high level. As stated above the mineral filler within the nanocomposite shall be preferably of nano-scale dimension, for instance below 500 nm. Thus the mineral filler (F) used in the inventive process must have the ability to reach such dimensions in the nanocomposite. This fact exclude however not the possibility that the mineral filler used in the inventive process may have a much higher weight average particle size, which is broken down to lower sizes due to the applied process. Accordingly the mineral filler (F) shall have preferably a weight average particle size (calculated from the particle size distribution as determined by laser diffraction according to ISO 13320-1:1939) below 5000 nm, more preferably below 1000 nm. In particular the weight average particle size shall preferably be in the range of 3 to 800 nm, more preferably in the range of 5 to 500 nm.

Such low particles sizes of the mineral filler contribute to a rather high surface area. Thus the surface area of the mineral filler (F) determined as the BET surface according to ISO 787-11 shall preferably be at least 5 $m^2/g$, more preferably at least 8 $m^2/g$.

Accordingly the mineral filler (F) is preferably selected from the group consisting of silicate (e.g. clay, talc, mica), silica ($SiO_2$), carbon nanotubes, nanowhiskers of SiC, calcium carbonate ($CaCO_3$), and mixtures thereof. A preferred mineral filler (F) is selected from the group consisting of clay compounds, talc, mica, silica and calcium carbonate. Especially preferred mineral fillers are selected from the group consisting of clay compounds, silica and calcium carbonate. In a preferred embodiment the organic filler (F) is a calcium carbonate.

In case silicates, in particular clays, are used in the preparation of the nanocomposite than they may be made organophilic before used in the process by chemical modification such as by cation exchange treatment using alkyl ammonium or phosphonium cation complexes. Such cation complexes intercalate between the silicate layers (clay layers). Such modified layered silicates are commercially available, e.g. as Cloisite, Nanofill and Nanomer. The modification of layered materials e.g. is described in WO 01/92388, p. 32 to 34, the content of which is enclosed herein by reference. Preferably such organophilic silicates, i.e. organophilic clays, may have a weight average particle size below 800 nm, more preferably below 400 nm, yet more preferably below 100 nm.

A preferred calcium carbonate as mineral filler (F) has a weight average particle size below 1200 nm, more preferably below 1000 nm, yet more preferably below 900 nm. Additionally such a calcium carbonate may have a surface area in the range of 5 to 50 $m^2/g$, more preferably in the range of 8 to 25 $m^2/g$.

To achieve a further improvement of the dispersion of the mineral filler (F) within the polyolefin (PO) a compatibilizer (C) may be added. A compatiblizer (C) according to this invention is an organic compound which is compatible with the chemical nature of the mineral filler (F) on the one hand and with the chemical nature of the polyolefin (PO) on the other hand so that the dispersion of the mineral filler (F) particles and/or the delamination of the layers of the mineral filler (F) in the matrix polymer during the preparation of the nanocomposite is improved. More precisely the compatiblizer (C) is an organic compound comprising functional groups, more specifically comprising polar groups. Such organic compounds can be small organic molecules or functionalized polymers.

Preferred representatives of compatiblizers (C) belonging to the group of small organic molecules are fatty acids, fatty acid amides and fatty acid esters. More specifically the compatiblizers (C) belonging to the group of small organic molecules are selected from the group consisting of non-branched saturated C7 to C30 fatty acids, non-branched unsaturated C7 to C30 fatty acids, non-branched saturated C7 to C30 fatty acid amides, non-branched unsaturated C7 to C30 fatty acid amides, non-branched saturated C7 to C30 fatty acid esters and non-branched unsaturated C7 to C30 fatty acid esters. Especially preferred compatiblizers (C) belonging to the group of small organic molecules are non-branched saturated fatty acids, in particular non-branched saturated C7 to C30 fatty acids, like stearic acid.

In case the compatiblizer (C) belongs to the family of functionalized polymers, a grafted polyolefin (PO) is preferred. A preferred representative is maleic anhydride grafted polyolefin (PO), like maleic anhydride grafted polyethylene or maleic anhydride grafted polypropylene. The most preferred compatibilizer (C) is maleic anhydride grafted polypropylene homo-or copolymer having an anhydride content of 0,5 to 10, preferably 1 to 8 wt% and a melt flow rate (230°C/2,16 kg) of 1 to 100, preferably 2 to 50 g/10 min.

Accordingly in case a compatiblizer (C) is used in the present invention it is preferably a non-branched saturated C7 to C30 fatty acid, like stearic acid and/or a maleic anhydride grafted polypropylene.

The polyolefin (PO) in which the mineral filler is dispersed can be any known polyolefin (PO) known in the art. However it is appreciated that the polyolefin (PO) (PO) has a rather low melt flow rate (MFR), i.e. a rather high molecular weight. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined die under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as $MFR_2$ (230 °C). Accordingly, it is preferred that in the present invention the polyolefin (PO) used in the process has an $MFR_2$ (230 °C) below 50 g/10 min, more preferably below 20 g/10 min, still more preferably below 12 g/10 min.

Preferably the polyolefin (PO) is a polyethylene or polypropylene. In a preferred embodiment the polyolefin (PO) is a propylene homopolymer. The expression propylene homopolymer used in the instant invention relates to a polypropylene that consists substantially, i.e. of at least 97 wt%, preferably of at least 98 wt%, more preferably of at least 99 wt%, still more preferably of at least 99.8 wt% of propylene units. In an especially preferred embodiment only propylene units in the propylene homopolymer are detectable. The comonomer content can be determined with FT infrared spectroscopy, as described in the example section.

In the first step (step (a)) of the preparation of the nanocomposite a slurry (S) must be provided. The slurry (S) is obtained by adding at least the mineral filler (F) to the dispersant (D). In case a compatiblizer (C) is used this is preferably also added to the dispersant (D).

To achieve an especially effective frozen slurry (FS) it is preferred that the mineral filler (F) and optionally the compatibilizer (C) are present in the dispersant (D) in specific amounts. Accordingly slurry (S) comprises preferably

- 10 to 80 wt.-%, more preferably 15 to 60 wt.-%, still more preferably 20 to 40 wt.-% dispersant (D),
- 90 to 20 wt.-% filler (F), more preferably 85 to 40 wt.-%, yet more preferably 80 to 60 wt.-% , and
- 0 to 10 wt.-% compatibilizer (C), more preferably 0 to 8 wt.-%, like 1 to 6 wt.-%,

based on the total amount of the dispersant (D), the filler (F) and the compatibilizer (C), preferably on the total amount of the slurry (S).

Preferably the dispersant (D) is mixed, i.e. high speed mixed, with the mineral filler (F) and - if present - with the compatiblizer (C) and/or exposed to sonication to obtain the slurry (S).

After the forming of the slurry (S), the slurry must be frozen to obtain a frozen slurry (FS) (step (b)). The slurry (S) is frozen in case the dispersant (D) is cooled down to its solid state. The freezing of the slurry can be accomplished by means known in the art. Preferably the freezing is accomplished rapidly to avoid any settling of particles, in particular of the mineral filler (F) particles, within the frozen slurry (FS). Accordingly shock-freezing is a preferred way to generate the frozen slurry (FS). Therefore the slurry (S) is preferably frozen by liquid inert gas, like liquid nitrogen.

The frozen slurry (FS) may be broken into smaller pieces to facilitate feeding of the frozen slurry into the extruder. Care must be taken that the breaking does not lead to a melting of the frozen slurry (FS). Typically the mean particle size of the frozen slurry (FS) is below 10 mm, more preferably below 6 mm. Thus the mean particle size is preferably in the range of 1 to 10 mm, more preferably in the range of 3 to 7 mm, like 4 to 6 mm. A suitable instrument for breaking the frozen slurry is an electric ice crusher as for example described in US 3,313.493.

Subsequently the frozen slurry (FS) is extruded together with the polyolefin (PO). For the extrusion any melt mixing device known in the art is suitable. Preferably a co-rotating twin screw extruder with kneading block segments, like the commercial PRISM TSE 16 extruder, is used.

One essential aspect of the present invention is that not a dry or freeze-dried mineral filler is used in the preparation of the nanocomposite but a frozen slurry (FS) comprising the mineral filler (F). Thus contrary to the state of the art the mineral filler is "encapsulated" by material which expands when exposed to a pressure reduction and/or temperature increase. It is one finding of the present invention that the rapid phase change of the frozen dispersant (D) from the solid phase into the gas phase during the extrusion (high pressure and heat generation) leads to a very effective dispersion and/or exfoliation of the mineral fillers (F). Further the exfoliated mineral fillers (F) are very evenly dispersed within the polyolefin (PO). Thus - as stated above - the mineral fillers (F) after exfoliation due to the phase change of the dispersant (D) have preferably nano-scale dimensions within the polyolefin (PO). A preferred weight average particle size is below 500 nm. More preferably the weight average particle size of the exfoliated mineral fillers (F) is below 100 nm, yet more preferably below 10 nm, like below nm.

The nano-scale dimension of the finely dispersed and/or exfoliated mineral filler and its even distribution within the polyolefin (PO) leads to improved properties of the thus obtained nanocomposite, namely to high stiffness at a high impact strength. Furthermore, this way of producing a nanocomposite is very cost efficient and energy saving and results in low volatile emissions.

Especially good results in term of dispersion and/or exfoliation are achieved in case the temperature in the extruder is in range of 120 to 280 °C, more preferably in the range of 130 to 250 °C. The lowest temperature should be set in the feed zone of the extruder.

The ratio of the frozen slurry (FS) and the polyolefin (PO) fed into the extruder depends on the amount of mineral filler (F) within the frozen (FS). It is appreciated that the amount of mineral filler within the nanocomposite is in the range of 0.5 to 40 wt.-%, more preferably in the range of 1.0 to 20 wt.-%, yet more preferably in the range of 2 to 15 wt.-%. Accordingly the weight ratio between the mineral filler (F) and the polyolefin (PO) [wt% (F) / wt% (PO)] is preferably 0.005 to 0.70, more preferably 0.01 to 0.25, still more preferably 0.02 to 0.12.

The frozen slurry (FS) can be fed to the extruder together with the polyolefin (PO) or separately. In case the frozen slurry (FS) is fed separately into the extruder, it is preferred that the frozen slurry (FS) is fed downstream of the polyolefin (PO) feed point into the extruder.

However it is preferred that the frozen slurry (FS) is fed together with the polyolefin (PO) into the extruder.

Therefore in a preferred embodiment the process for the preparation of a nanocomposite comprising a polyolefin (PO), like polypropylene, and a mineral filler, preferably a mineral nanofiller, comprises the steps of

(a) forming a slurry (S) by adding at least a mineral filler (F) to a dispersant (D),
(b) freezing the slurry (S) obtaining a frozen slurry (FS), and
(c) optionally breaking the frozen slurry (FS) into feedable particles, and
(d) mixing the frozen slurry (FS) with a polyolefin (PO) obtaining a blend (B),
(e) extruding the blend (B) which comprises the frozen slurry (FS),
(f) optionally removing the dispersant (D) in gaseous form during the extrusion, and
(g) optionally recovering the prepared nanocomposite.

The mixing of the frozen slurry (FS) and the polyolefin (PO) can be accomplished by any suitable mixing device known in the art, for instance by a solid extruder premixer.

In case the polyolefin (PO) and the frozen slurry (FS) are added together into the extruder it is appreciated that also the polyolefin (PO) is frozen. The freezing of the polyolefin (PO) can be for instance accomplished by storing it for several hours at temperatures below 15 °C. Accordingly before blending the frozen slurry (FS) and the polyolefin (PO), the polyolefin (PO) is kept for at least 24 hours, more preferably for at least 40 hours, at a temperature of at least 20 °C, like at least 25 °C. Afterwards the frozen polyolefin (PO) and the frozen slurry (FS) are mixed to the blend (B), which is subsequently fed into the extruder in which the blend is pressurized and/or heated leading to the above described exfoliation and dispersion of the mineral filler (F) within the polyolefin (PO).

During the extrusion the dispersant (D) can be removed, for instance by degassing the extruder. Typically the degassing is accomplished by installing one or more suitable degassing device(s) as described for example in EP 585,528 or EP 490,359 on the mixing extruder, optionally applying a reduced pressure to at least one of these devices.

After the extrusion the obtained nanocomposite may be solidified, for instance in a water bath. Subsequently the solidified nanocomposite can be pelletized in the manner known in the art. Typically, the nanocomposite will be extruded in a single or several individual melt strands of 2-5 mm diameter into a water bath having a temperature between 2 and 50°C, solidifying said strand(s) there and feeding the solid strand(s) to a rotating knife pelletizer. Alternatively, an underwater pelletizer can be used.

The process of the present invention is in particular applicable for the preparation of a nanocomposite comprising a polypropylene, a mineral filler, preferably a mineral nanofiller like $CaCO_3$, and optionally a compatibilizer (C), wherein the nanocomposite has

(a) a crystallization temperature of at least 119 °C, more preferably of at least 120 °C and/or a melting temperature of at least 160 °C, more preferably of at least 163 °C,
(b) a tensile modulus measured according to ISO 527-2 of at least 1850 MPa, more preferably of at least 1900 MPa, and/or an impact strength measured according to ISO 179 (1eA at +23 °C) of more than 3.1 kJ/m$^2$, more preferably of more than 3.3 kJ/m$^2$.

The present invention is further directed to a nanocomposite obtainable by the process as defined in the instant invention.

A specific finding of the present invention is that the new nanocomposite is featured by a high stiffness and impact, even though the amount of a mineral filler, especially $CaCO_3$, is rather low. Accordingly the present invention is in particular directed to a nanocomposite comprising a polypropylene, $CaCO_3$ and optionally a compatibilizer (C), wherein the nanocomposite fulfils formula (I)

$$TM > A \times C + TM(PP) \qquad\qquad (I)$$

wherein

"TM"        is the tensile modulus of the nanocomposite according to ISO 527-2,

"A"        is higher than 23, preferably higher than 26, more preferably higher than 29, yet more preferably higher than 32,

"C"        is the amount of the mineral filler, preferably the amount of $CaCO_3$, within the nancomposite by weight percentage (wt.-%), and

"TM(PP)"        is the tensile modulus of the pure polypropylene according to ISO 527-2, preferably in the range of 1600 to 1750,

with the proviso that the amount of the mineral filler, preferably the amount of $CaCO_3$, within the nanocomposite is in the range of 0.5 to 40 wt.-%, preferably in the range of 1.0 to 20 wt.-%, more preferably in the range of 2 to 15 wt.-%.

Furthermore it is appreciated that the nanocomposite as defined in the previous has

(a) a crystallization temperature of at least 119 °C, more preferably of at least 120 °C,

(b) a melting temperature of at least 160 °C, more preferably of at least 163 °C,

(c) a tensile modulus measured according to ISO 527-2 of at least 1850 MPa, more preferably of at least 1900 MPa, and

(d) an impact strength measured according to ISO 179 (1eA at +23 °C) of more than 3.1 kJ/m$^2$, more preferably of more than 3.3 kJ/m$^2$.

More specifically the new nanocomposite, in particular obtainable according to the process as described in detail above, preferably comprises

(a) polypropylene in the range of 99.5 to 60 wt.-%, more preferably in the range of 99.0 to 80 wt.-%, yet more preferably in the range of 98 to 85 wt.-%,

(b) $CaCO_3$ in the range of 0.5 to 40 wt.-%, more preferably in the range of 1.0 to 20 wt.-%, yet more preferably in the range of 2 to 15 wt.-%, and

(c) optionally a compatibilizer (C) in the range of 0 to 10 wt.-%, more preferably in the range of 0 to 8 wt.-%, still more preferably in the range of like 1 to 6 wt.-%,

based on the amount of polypropylene, $CaCO_3$ and optionally the compatibilizer (C), more preferably based on the total amount of nanocomposite.

The $CaCO_3$ in the nanocomposite is evenly dispersed and has preferably a weight average particle size of equal or less than 1000 nm, yet more preferably of equal or less than 800 nm, still more preferably of equal or less than 500 nm, still yet more preferably of equal or less than 100 nm, like equal or less than 50 nm.

Further it is appreciated that the nanocomposite has an $MFR_2$ (230 °C) below 50 g/10 min, more preferably below 20 g/10 min, still more preferably below 12 g/10 min.

The present invention will now be illustrated in further detail by the following examples.

## EXAMPLES

### A. Measuring methods

### 1. Mw, Mn, MWD

Mw/Mn/MWD are measured by Gel Permeation Chromatography (GPC) according to the following method:

The weight average molecular weight (Mw) and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter is used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution are injected per analysis. The column set is calibrated using relative calibration with 19 narrow MWD polystyrene (PS) standards in the range of 0.5 kg/mol to 11 500 kg/mol and a set of well characterized broad polypropylene standards. All samples are prepared by dissolving 5 to 10 mg of polymer in 10 mL (at 160 °C) of stabilized TCB (same as mobile phase) and keeping for 3 hours with continuous shaking prior sampling in into the GPC instrument.

## 2. Melt Flow Rate (MFR)

The melt flow rates are measured with a load of 2.16 kg ($MFR_2$) at 230 °C.
The melt flow rate is that quantity of polymer in grams which the test apparatus standardised to ISO 1133 extrudes within 10 minutes at a temperature of 230 °C under a load of 2.16 kg.

## 3. Melting temperature; crystallization temperature

Melting temperature Tm, crystallization temperature Tc, and the degree of crystallinity: measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

## 4. Density

The density is measured according to ISO 11183-2. Sample preparation is done in accordance with ISO 1872-2B.

## 5. Comonomer content

Comonomer content (wt%) is determined in a known manner based on Fourier transform infrared spectroscopy (FTIR) determination calibrated with $C^{13}$-NMR.

## 6. Tensile Modulus; Elongation at break

Tensile Modulus and elongation at break are measured according to ISO 527-2 (cross head speed = 50 mm/min; 23 °C) using injection molded specimens as described in EN ISO 1873-2 (dog bone shape, 4 mm thickness).

## 7. Charpy impact test

The charpy notched impact strength (Charpy NIS) is measured according to ISO 179 1eA at +23 °C. Injection molded test bars of 80x10x4 $mm^3$ prepared in accordance with EN ISO 1873-2 are used for this test.

## 8. Weight average particle size

The weight average particle size is calculated from the particle size distribution as determined by laser diffraction according to ISO 13320-1:1999.

## 9. Surface area

The surface area is determined as the BET surface according to ISO 787-11 with nitrogen ($N_2$).

## B. Preparation of Examples

Components used in the examples:

The polyolefin is the commercial propylene homopolymer HD120 MO (density 905 $kg/m^3$, $MFR_2$ (230 °C) 8 g/10min) of the supplier Borealis. The polymer has a weight average molecular weight ($M_w$) of 367 kg/mol, a number average molecular weight ($M_n$) of 74 kg/mol and an MWD ($M_w/M_n$) of 4.96.

The Calcium carbonate filler is the commercial product Hydrocarb 99AV (weight average particle size 0.8 $\mu$m, specific BET surface 8.5 $m^2$/g) of the supplier Omya, Switzerland.

**Example 1:**

A slurry of calcium carbonate Hydrocarb 99AV in de-ionized water containing a solid content of 22 wt% was prepared by high-speed mixing using an Ultra-Turrax mixer T25 (IKA GmbH, Germany) with a mixing time of 10 minutes. 100 ml portions of the slurry were poured into polyethylene bags and frozen at -25°C for 12 hours, then taken from the bags and broken with a commercial ice crusher (Deni 6100 Automatic, Deni Inc., USA) into pieces of about 5 mm diameter. 8,5 wt% of these frozen slurry pieces were mixed with 91,5 wt% of polypropylene pellets also kept at -25°C for 12 hours in a sufficiently big polyethylene bag by shaking; the resulting mixture was fed to the main hopper of a PRISM TSE 16 twin screw extruder (L/D ratio 25, two kneading blocks) set with a temperature profile of 135 °C - 210 °C - 215 °C - 220 °C - 215 °C from feed zone to metering zone. A screw speed of 50 rpm and a throughput of 2.5 kg/h were set for the extrusion mixing, degassing took place only via the hopper. The melt strand was solidified in a water bath kept at about +10 °C and pelletized afterwards. Before further testing and injection moulding the pellets were dried overnight at 100 °C.

**Example 2:**

The same slurry as in example 1 was used, again pouring 100 ml portions of the slurry into polyethylene bags. In this case, the slurry was frozen by placing each bag into a wide glass dish and covering it with liquid nitrogen until completely solid. The further handling and mixing was again identical to example 1.

**Example 3:**

The same procedure as in example 2 was used, combining 18 wt% of frozen slurry with 72 wt% of polypropylene.

**Comparative Example 1:**

The pure polypropylene not exposed to a cooling step was fed to the extruder and homogenized with the same process settings as in example 1.

**Comparative Example 2:**

7 wt% of the calcium carbonate were mixed with 93 wt% of polypropylene not exposed to a cooling step in a sufficiently big polyethylene bag by shaking. The further handling and mixing was again identical to example 1.

**Table 1:** Properties of the nanocomposites

|  | Filler amount | Filler type | MFR | Tm | Tc | Tensile Modulus | Elongation at break | Charpy (+23 °C) |
|---|---|---|---|---|---|---|---|---|
|  | [wt%] | - | [g/10min] | [°C] | [°C] | [MPa] | [%] | [kJ/$m^2$] |
| E 1 | 7 | frozen | 8,1 | 163 | 119 | 1910 | 15 | 3,5 |
| E 2 | 7 | $N_2$-frozen | 8,1 | 163 | 120 | 1920 | 17 | 3,5 |
| E 3 | 14 | $N_2$-frozen | 7,9 | 164 | 131 | 2110 | 13 | 3,3 |
| CE 1 | 0 | - | 8,2 | 163 | 116 | 1640 | 215 | 2,6 |
| CE 2 | 7 | dry | 8,2 | 163 | 119 | 1800 | 10 | 3,1 |

**Claims**

1.    Process for the preparation of a nanocomposite comprising polyolefin and a mineral filler, wherein the process comprises the steps of

(a) forming a slurry (S) by adding at least a mineral filler (F) to a dispersant (D),
(b) freezing the slurry (S) obtaining a frozen slurry (FS),
(c) optionally breaking the frozen slurry (FS) into feedable particles,
(d) extruding the frozen slurry (FS) with polyolefin (PO), and
(e) optionally recovering the prepared nanocomposite.

2. Process according to claim 1, comprising the steps of

(a) forming a slurry (S) by adding at least a mineral filler (F) to a dispersant (D),
(b) freezing the slurry (S) obtaining a frozen slurry (FS), and
(c) optionally breaking the frozen slurry (FS) into feedable particles, and
(d) mixing the frozen slurry (FS) with a polyolefin (PO) obtaining a blend (B),
(e) extruding the blend (B) which comprises the frozen slurry (FS), and
(f) optionally recovering the prepared nanocomposite.

3. Process according to claim 1 or 2, wherein the dispersant (D) is removed during extruding step, preferably by degassing.

4. Process according to anyone of the preceding claims, wherein the extrusion temperature is in the range of 120 to 280 °C.

5. Process according to anyone of the preceding claims, wherein the polyolefin (PO) is frozen.

6. Process according to anyone of the preceding claims, wherein the freezing of the slurry (S) in step (b) is accomplished by using liquid inert gas.

7. Process according to anyone of the preceding claims, wherein in step (a) the slurry is formed by adding at least a mineral filler (F) and a compatibilizer (C) to the dispersant (D).

8. Process according to anyone of the preceding claims, wherein the slurry (S) comprises
10 to 80 wt.-% dispersant (D)
90 to 20 wt.-% filler (F), and
0 to 10 wt.-% compatibilizer (C),
based on the total amount of the dispersant (D), the filler (F) and the compatibilizer (C).

9. Process according to anyone of the preceding claims, wherein the polyolefin (PO) is a polypropylene, preferably a propylene homopolymer.

10. Process according to anyone of the preceding claims, wherein the mineral filler (F) has a weight average particle size below 5000 nm.

11. Process according to anyone of the preceding claims, wherein the mineral filler (F) has a surface area of at least 5 $m^2$/g.

12. Process according to anyone of the preceding claims, wherein the mineral filler (F) is selected from the group consisting of silicate (e.g. clay, talc, mica), silica ($SiO_2$), carbon nanotube, nanowhisker of SiC, calcium carbonate ($CaCO_3$), and mixtures thereof.

13. Process according to anyone of the preceding claims, wherein the compatibilizer (C) is an organic compound comprising (a) polar group(s) is added when forming the slurry (S).

14. Process according to anyone of the preceding claims, wherein the dispersant (D) is(are) water and/or (a) volatile organic compound(s).

15. Nanocomposite obtainable according to anyone of the preceding claims.

**16.** Nanocomposite comprising a polypropylene and CaCO$_3$, wherein the nanocomposite fulfils formula (I)

$$TM > A \times C + TM(PP) \qquad\qquad (I)$$

wherein

"TM" is the tensile modulus of the nanocomposite according to ISO 527-2,
"A" is higher than 23,
"C" is the amount of CaCO$_3$ within the nancomposite by weight percentage (wt.-%), and
"TM(PP)" is the tensile modulus of the pure polypropylene according to ISO 527-2,

with the proviso that the amount of CaCO$_3$ within the nanocomposite is in the range of 0.5 to 40 wt.-%, preferably in the range of 1.0 to 20 wt.-%, more preferably in the range of 2 to 15 wt.-%.

**17.** Nanocomposite according to claim 16, wherein the nanocomposite has

(a) a crystallization temperature of at least 119 °C,
(b) a melting temperature of at least 160 °C,
(c) a tensile modulus measured according to ISO 527-2 of at least 1850 MPa, and
(d) impact strength measured according to ISO 179 (1eA at +23 °C) of more than 3.1 kJ/m$^2$.

**18.** Nanocomposite according to claim 16 or 17, wherein the amount of CaCO$_3$ within the nanocomposite is in the range of 6 to 20 wt.-%.

**Amended claims in accordance with Rule 137(2) EPC.**

**1.** Process for the preparation of a nanocomposite comprising polyolefin and a mineral filler, wherein the process comprises the steps of

(a) forming a slurry (S) by adding at least a mineral filler (F) to a dispersant (D),
(b) freezing the slurry (S) obtaining a frozen slurry (FS),
(c) optionally breaking the frozen slurry (FS) into feedable particles,
(d) extruding the frozen slurry (FS) with polyolefin (PO), and
(e) optionally recovering the prepared nanocomposite.

**2.** Process according to claim 1, comprising the steps of

(a) forming a slurry (S) by adding at least a mineral filler (F) to a dispersant (D),
(b) freezing the slurry (S) obtaining a frozen slurry (FS), and
(c) optionally breaking the frozen slurry (FS) into feedable particles, and
(d) mixing the frozen slurry (FS) with a polyolefin (PO) obtaining a blend (B),
(e) extruding the blend (B) which comprises the frozen slurry (FS), and
(f) optionally recovering the prepared nanocomposite.

**3.** Process according to claim 1 or 2, wherein the dispersant (D) is removed during extruding step, preferably by degassing.

**4.** Process according to anyone of the preceding claims, wherein the extrusion temperature is in the range of 120 to 280 °C.

**5.** Process according to anyone of the preceding claims, wherein the polyolefin (PO) is frozen.

**6.** Process according to anyone of the preceding claims, wherein the freezing of the slurry (S) in step (b) is accomplished by using liquid inert gas.

**7.** Process according to anyone of the preceding claims, wherein in step (a) the slurry is formed by adding at least a mineral filler (F) and a compatibilizer (C) to the dispersant (D).

**8.** Process according to anyone of the preceding claims, wherein the slurry (S) comprises 10 to 80 wt.-% dispersant (D) 90 to 20 wt.-% filler (F), and
0 to 10 wt.-% compatibilizer (C),
based on the total amount of the dispersant (D), the filler (F) and the compatibilizer (C).

**9.** Process according to anyone of the preceding claims, wherein the polyolefin (PO) is a polypropylene, preferably a propylene homopolymer.

**10.** Process according to anyone of the preceding claims, wherein the mineral filler (F) has a weight average particle size below 5000 nm.

**11.** Process according to anyone of the preceding claims, wherein the mineral filler (F) has a surface area of at least 5 $m^2/g$.

**12.** Process according to anyone of the preceding claims, wherein the mineral filler (F) is selected from the group consisting of silicate (e.g. clay, talc, mica), silica ($SiO_2$), carbon nanotube, nanowhisker of SiC, calcium carbonate ($CaCO_3$), and mixtures thereof.

**13.** Process according to anyone of the preceding claims, wherein the compatibilizer (C) is an organic compound comprising (a) polar group(s) is added when forming the slurry (S).

**14.** Process according to anyone of the preceding claims, wherein the dispersant (D) is(are) water and/or (a) volatile organic compound(s).

**15.** Nanocomposite obtainable according to anyone of the preceding claims.

Europäisches
Patentamt
European
Patent Office
Office européen
des brevets

**EUROPEAN SEARCH REPORT**

Application Number

EP 08 16 2192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/191510 A1 (CHAIKO DAVID J [US]) 16 August 2007 (2007-08-16) * example 3 * | 1 | INV. C08J5/00 C08L23/00 C08K3/04 |
| A | US 2006/235127 A1 (MOAD GRAEME [AU] ET AL MOAD GRAEME [AU] ET AL) 19 October 2006 (2006-10-19) * page 1, paragraph 11-19; example 10 * | 15 | C08K3/34 C08K3/26 C08K3/36 C08K3/14 |
| A | WO 2007/130755 A (POLYONE CORP [US]; AMCOL INTERNATIONAL CORP [US]; JARUS DAVID [US]; QI) 15 November 2007 (2007-11-15) * page 2, paragraph 6; examples * | 1,15 | |
| X | US 2003/060547 A1 (CHAN CHI-MING [HK] ET AL) 27 March 2003 (2003-03-27) * page 1, paragraph 7-11 * * page 2, paragraph 16 * * page 3, paragraphs 40,46; table 5 * | 16 | |
| A | US 6 521 690 B1 (ROSS MARK [US] ET AL) 18 February 2003 (2003-02-18) * column 4, line 50 - line 54; example 1 * | 15 | **TECHNICAL FIELDS SEARCHED (IPC)** C08J C08L |
| A | EP 1 160 277 A (NEXANS [FR]) 5 December 2001 (2001-12-05) * example 3 * | 1 | C08K |
| A | US 2001/033924 A1 (QIAN GUOQIANG [US] ET AL) 25 October 2001 (2001-10-25) * claims * | 15 | |

-/--

The present search report has been drawn up for all claims

| Place of search | Date of completion of the search | Examiner |
|---|---|---|
| Munich | 12 January 2009 | Masson, Patrick |

EPO FORM 1503 03.82 (P04C01)

Europäisches Patentamt

European Patent Office

Office européen des brevets

**EUROPEAN SEARCH REPORT**

Application Number

EP 08 16 2192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GORNA K; HUND M; VUCAK M; GROHN F; WEGNER G: "Amorphous calcium carbonate in form of spherical nanosized particles and its application as fillers for polymers" MATERIALS SCIENCE AND ENGINEERING A, vol. 477, 25 March 2008 (2008-03-25), pages 217-225, XP002509815 * table 3 * | 16 | |
| A | WANG W-Y; ZENG X-F; WANG G-Q; CHEN J-F: "Preparation and characterization of calcium carbonate/low-density-polyethylene nanocomposites" JOURNAL OF APPLIED POLYMER SCIENCE, vol. 106, 5 November 2007 (2007-11-05), pages 1932-1938, XP002509816 * page 1933 * | 1,15 | |
| X | CHAN C-M; WU J; LI J-X; CHEUNG Y-K: "Polypropylene/calcium carbonate nanocomposites" POLYMER, vol. 43, 2002, pages 2981-2992, XP002509817 * table 4 * | 16 | TECHNICAL FIELDS SEARCHED (IPC) |
| X | ZHANG Q-X ET AL: "Crystallization and impact energy of polypropylene/CaCO3 nanocomposites with nonionic modifier" POLYMER, ELSEVIER SCIENCE PUBLISHERS B.V, GB, vol. 45, no. 17, 5 August 2004 (2004-08-05), pages 5985-5994, XP004546884 ISSN: 0032-3861 * table 3 * | 16 | |

-/--

The present search report has been drawn up for all claims

| Place of search | Date of completion of the search | Examiner |
|---|---|---|
| Munich | 12 January 2009 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 2 154 178 A1

Europäisches
Patentamt

European
Patent Office

Office européen
des brevets

# EUROPEAN SEARCH REPORT

**Application Number**

EP 08 16 2192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GANG WANG; XIAO YUAN CHEN; RUI HUANG; LING ZHANG: "Nano-CaCO3/polypropylene composites made with ultra-high-speed mixer" JOURNAL OF MATERIALS SCIENCE LETTERS, vol. 21, 2002, pages 985-986, XP000910969 * figure 2 * | 16 | |
| X | HANIM H; FUAD M Y A; ZARINA R; ISHAK Z A M; HASSAN A: "Properties and structure of polypropylene/ Polyethylene-octene elastomer/nano CaCO 3 composites" JOURNAL OF THERMOPLASTIC COMPOSITE MATERIALS, vol. 21, March 2008 (2008-03), pages 123-140, XP009110522 * table 1 * | 16 | |
| X | GU J; JIA D S; CHENG R S: "Polypropylene composite toughened by a novel modified nano-CaCO3" POLYMER - PLASTICS TECHNOLOGY AND ENGINEERING, vol. 47, June 2008 (2008-06), pages 583-589, XP009110523 * figure 4 * | 16 | TECHNICAL FIELDS SEARCHED (IPC) |

The present search report has been drawn up for all claims

| Place of search | Date of completion of the search | Examiner |
|---|---|---|
| Munich | 12 January 2009 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 16 2192

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2009

| Patent document cited in search report | | Publication date | Patent family member(s) | | Publication date |
|---|---|---|---|---|---|
| US 2007191510 | A1 | 16-08-2007 | NONE | | |
| US 2006235127 | A1 | 19-10-2006 | AU | 2004249438 A1 | 29-12-2004 |
| | | | BR | PI0411903 A | 08-08-2006 |
| | | | CA | 2529157 A1 | 29-12-2004 |
| | | | CN | 1809612 A | 26-07-2006 |
| | | | WO | 2004113436 A1 | 29-12-2004 |
| | | | KR | 20060056900 A | 25-05-2006 |
| | | | MX | PA05013970 A | 25-05-2006 |
| WO 2007130755 | A | 15-11-2007 | NONE | | |
| US 2003060547 | A1 | 27-03-2003 | NONE | | |
| US 6521690 | B1 | 18-02-2003 | AT | 269375 T | 15-07-2004 |
| | | | CA | 2300678 A1 | 25-11-2000 |
| | | | DE | 60011514 D1 | 22-07-2004 |
| | | | DE | 60011514 T2 | 30-06-2005 |
| | | | EP | 1055706 A1 | 29-11-2000 |
| | | | JP | 2001019854 A | 23-01-2001 |
| EP 1160277 | A | 05-12-2001 | AT | 312140 T | 15-12-2005 |
| | | | CA | 2349141 A1 | 30-11-2001 |
| | | | DE | 60115535 T2 | 10-08-2006 |
| | | | DK | 1160277 T3 | 18-04-2006 |
| | | | ES | 2251445 T3 | 01-05-2006 |
| | | | FR | 2809737 A1 | 07-12-2001 |
| | | | JP | 2002053316 A | 19-02-2002 |
| | | | US | 2002010248 A1 | 24-01-2002 |
| US 2001033924 | A1 | 25-10-2001 | US | 6462122 B1 | 08-10-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0192388 A
- US 3313493 A
- EP 585528 A
- EP 490359 A